# DEMANDE DE BREVET EUROPEEN

(11) **EP 2 605 551 A1**
(43) Date de publication de la demande: **19.06.2013**
(21) Numéro de dépôt: 11306639.3
(22) Date de dépôt: 12.12.2011
(51) Int. Cl.: H04W 4/16, H04L 29/12, H04W 8/26, H04L 29/08, H04W 8/18

(54) **Procédé de redirection d'appel mis en oeuvre dans un système de télécommunications et système correspondant**

(71) Demandeur: Gemalto SA, 92190 Meudon (FR)
(72) Inventeur: Quiriconi, Jean-Remi, 13705 La Ciotat (FR); Morel, Didier, 13705 La Ciotat (FR)

(57) **Abrégé**

L'invention concerne notamment un procédé de redirection d'appel mis en oeuvre dans un système de télécommunications comprenant:
- un premier terminal de télécommunications (10) coopérant avec un élément de sécurité (11) renfermant des données de sécurité correspondant à plusieurs abonnements (ABO 1 - ABO 3) à au moins un réseau d'opérateur de télécommunication (OP 1 - OP 3), au moins un abonnement étant inactif et au moins un abonnement étant actif, à chaque abonnement correspondant un numéro d'appel, un numéro d'appel étant appelé numéro d'appel actif si l'abonnement correspondant est actif, un numéro d'appel étant appelé numéro d'appel inactif si l'abonnement correspondant est inactif ;
- un gestionnaire (12) de l'élément de sécurité (11) ayant connaissance de l'abonnement actif dans l'élément de sécurité (11);
- au moins un réseau d'opérateur de télécommunications (OP 1 - OP 3).
Selon l'invention, le procédé consiste à transmettre depuis le gestionnaire de l'élément de sécurité (11) au réseau d'opérateur (OP 1 - OP 3) une information sur l'abonnement actif afin que celui-ci redirige un numéro d'appel inactif composé par un deuxième terminal de télécommunications (20) vers le numéro d'appel actif.

## Description

Le domaine de l'invention est celui des télécommunications. Plus précisément, la présente invention concerne un procédé de redirection d'appel mis en oeuvre dans un système de télécommunications et un système correspondant.

Dans un système de télécommunications tel que le système GSM, UMTS ou LTE (« Long Term Evolution » en anglais), des terminaux peuvent communiquer entre eux grâce à la souscription d'abonnements auprès d'opérateurs de radiotéléphonie. Ces terminaux sont généralement mobiles (téléphones, ordinateurs portables, PDAs,...) et renferment chacun un élément de sécurité de type carte SIM ou USIM renfermant des données de sécurité aptes à établir des communications. Ces données de sécurité sont notamment un identifiant IMSI et une clé de chiffrement Ki permettant d'authentifier l'abonné auprès de l'opérateur auprès duquel il aura souscrit un abonnement. Les terminaux peuvent également être fixes. L'invention s'applique également aux communications entre machines (M2M).

Un élément de sécurité peut également se présenter sous la forme d'une puce renfermant une application de type SIM. Cette puce peut être soudée dans le terminal et remplit la fonction de la carte précédemment mentionnée. L'UICC n'est alors plus amovible du terminal et sera par la suite appelé e-UICC.

Un élément de sécurité renferme en général un abonnement unique mais il a été envisagé de lui faire supporter plusieurs abonnements, soit souscrits auprès du même opérateur, soit souscrits auprès d'opérateurs différents. L'utilisateur peut ainsi choisir un abonnement parmi d'autres, en fonction de sa position géographique, de l'heure, de la couverture réseau disponible,... Prenons l'exemple d'un utilisateur français disposant d'un abonnement avec un opérateur français et qui voyage souvent à l'étranger, par exemple en Allemagne. Cet utilisateur aura tout intérêt à souscrire également un abonnement auprès d'un opérateur allemand pour pouvoir communiquer en Allemagne sans être en situation d'itinérance (« roaming » en anglais) par rapport à son opérateur français. Une fois arrivé en Allemagne, l'utilisateur, par exemple par l'intermédiaire de l'interface homme-machine de son terminal, basculera l'abonnement de son opérateur français vers l'abonnement de son opérateur allemand. Il en va de même pour un utilisateur qui désire posséder dans son terminal deux abonnements, l'un professionnel, l'autre privé. Il activera alors son abonnement professionnel en se rendant à son bureau et activera son abonnement privé une fois rentré à son domicile.

Le changement d'abonnement peut être réalisé soit à l'initiative de l'utilisateur, en fonction de sa position géographique (géolocalisation) de manière automatique, ou alors à l'initiative d'un élément extérieur qui commande le basculement d'un abonnement vers un autre.

Dans le cadre de la présente invention, un ou plusieurs abonnements sont actifs et au moins un abonnement est inactif.

Le problème posé par ces abonnements multiples compris dans un même terminal est qu'à chaque abonnement correspond un numéro d'appel différent.

Ainsi, il n'est pas possible d'appeler un abonné ou de lui envoyer des données (par exemple des SMS ou des MMS) si l'abonnement correspondant n'est pas actif. A titre d'exemple, si un utilisateur A dispose d'un terminal comprenant un élément de sécurité renfermant deux abonnements ABO 1 et ABO 2, l'abonnement ABO 1 correspondant à un numéro de téléphone (MSISDN) +123 et l'abonnement ABO 2 correspondant à un numéro de téléphone +456, cet utilisateur ne peut être joint sur le numéro +123 qui si son abonnement ABO 1 est actif. De même, il ne peut être joint sur le numéro +456 que si son abonnement ABO 2 est actif. Un utilisateur B ne pourra pas appeler l'utilisateur A sur le numéro +123 si l'abonnement ABO 2 est actif dans l'élément de sécurité du terminal de l'utilisateur A. Réciproquement, l'utilisateur B ne pourra pas appeler l'utilisateur A sur le numéro +456 si l'abonnement ABO 1 est actif dans l'élément de sécurité du terminal de l'utilisateur A. On entend ici par appel toute tentative d'entrer en communication, que ce soit par voix ou données.

Il en va de même pour l'administration des abonnements de l'élément de sécurité. Une administration d'un élément de sécurité est généralement opérée par une plate-forme OTA qui a besoin de connaître le numéro de téléphone actif de l'abonné pour pouvoir lui transmettre des données ou des programmes.

La présente invention a notamment pour objectif de remédier à ces inconvénients.

Plus précisément, un des objectifs de l'invention est de fournir un procédé permettant à un utilisateur B de joindre un utilisateur A disposant de plusieurs abonnements, au moins un abonnement étant inactif (un ou plusieurs autres abonnements pouvant être actifs).

Cet objectif, ainsi que d'autres qui apparaitront par la suite, est atteint grâce à un procédé de redirection d'appel mis en oeuvre dans un système de télécommunications comprenant:
- un premier terminal de télécommunications coopérant avec un élément de sécurité renfermant des données de sécurité correspondant à plusieurs abonnements à au moins un réseau d'opérateur de télécommunication, au moins un abonnement étant inactif et au moins un abonnement étant actif, à chaque abonnement correspondant un numéro d'appel, un numéro d'appel étant appelé numéro d'appel actif si l'abonnement correspondant est actif, un numéro d'appel étant appelé numéro d'appel inactif si l'abonnement correspondant est inactif;
- un gestionnaire de l'élément de sécurité ayant connaissance de l'abonnement actif dans l'élément de sécurité;
- au moins un réseau d'opérateur de télécommunications.

Selon l'invention, le procédé consiste à transmettre depuis le gestionnaire de l'élément de sécurité au réseau d'opérateur une information sur l'abonnement actif afin que celui-ci redirige un numéro d'appel inactif composé par un deuxième terminal de télécommunications vers le numéro d'appel actif.

Dans un mode de mise en oeuvre préférentiel, le gestionnaire de l'élément de sécurité commande l'activation d'un des abonnements dans l'élément de sécurité et l'élément de sécurité confirme l'activation de cet abonnement auprès du gestionnaire.

Avantageusement, chacun des abonnements a été souscrit auprès d'un opérateur distinct et le gestionnaire informe les opérateurs dont les abonnements ne sont pas actifs afin qu'ils redirigent les numéros d'appel inactifs composés par le deuxième terminal de télécommunications vers le numéro d'appel actif.

L'élément de sécurité est avantageusement un e-UICC ou un ensemble d'UICCs.

L'invention concerne également un système de télécommunications comprenant:
- un premier terminal de télécommunications coopérant avec un élément de sécurité renfermant des données de sécurité correspondant à plusieurs abonnements à au moins un réseau d'opérateur de télécommunication, au moins un abonnement étant inactif et au moins un abonnement étant actif, à chaque abonnement correspondant un numéro d'appel, un numéro d'appel étant appelé numéro d'appel actif si l'abonnement correspondant est actif, un numéro d'appel étant appelé numéro d'appel inactif si l'abonnement correspondant est inactif;
- un gestionnaire de l'élément de sécurité ayant connaissance de l'abonnement actif dans l'élément de sécurité;
- au moins un réseau d'opérateur de télécommunications.

Selon l'invention, le gestionnaire de l'élément de sécurité comprend des moyens pour transmettre au réseau d'opérateur une information sur l'abonnement actif afin que celui-ci redirige un numéro d'appel inactif composé par un deuxième terminal de télécommunications vers le numéro d'appel actif.

Préférentiellement, le gestionnaire de l'élément de sécurité comprend des moyens pour commander l'activation d'un des abonnements dans l'élément de sécurité et l'élément de sécurité comprend des moyens pour confirmer l'activation de cet abonnement auprès du gestionnaire.

Avantageusement, chacun des abonnements a été souscrit auprès d'un opérateur distinct et le gestionnaire comporte des moyens pour informer les opérateurs dont les abonnements ne sont pas actifs afin que ceux-ci redirigent chacun le numéro d'appel inactif composé par le deuxième terminal de télécommunications vers le numéro d'appel actif.

Préférentiellement, l'élément de sécurité est un e-UICC ou un ensemble d'UICCs.

La présente invention sera mieux comprise à la lecture de la description suivante d'un mode de mise en oeuvre préférentiel de l'invention, donné à, titre illustratif et non limitatif, et des dessins annexés, dans lesquels:
- La figure 1 représente un premier mode de mise en oeuvre du procédé selon la présente invention;
- La figure 2 représente une alternative au premier mode de mise en oeuvre du procédé selon la présente invention.

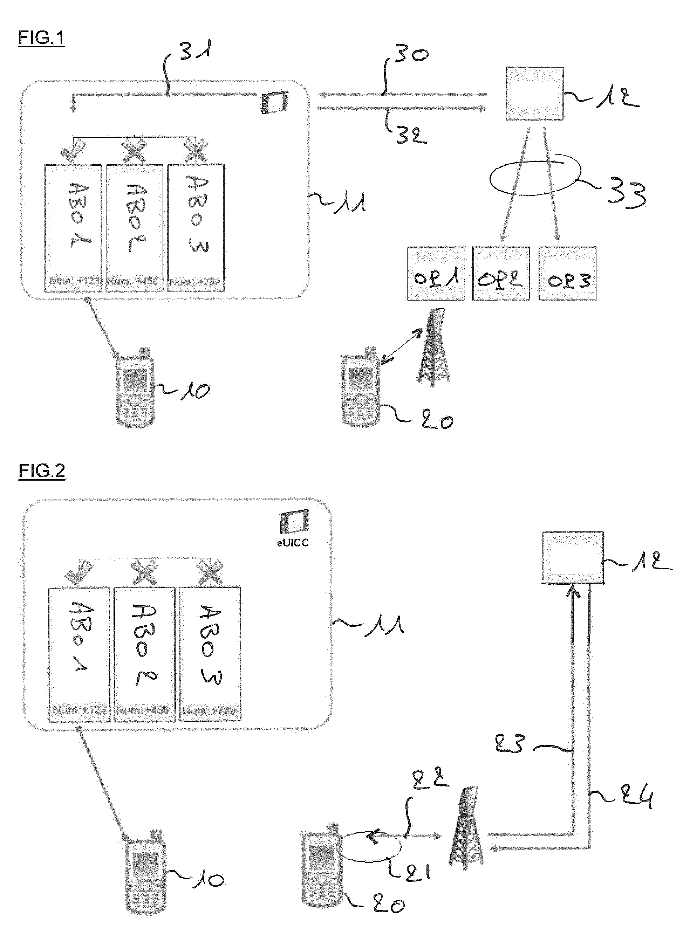

La figure 1 représente un premier mode de mise en oeuvre du procédé selon la présente invention.

Dans ce mode de mise en oeuvre, un premier terminal de télécommunications 10 comprend ou coopère avec un élément de sécurité 11 (une carte SIM, USIM ou un e-UICC par exemple) renfermant des données de sécurité correspondant à plusieurs abonnements. Ici, trois abonnements ABO 1 à ABO 3 sont présents dans l'élément de sécurité 11. Les abonnements peuvent avoir été souscrits auprès du même ou de plusieurs opérateurs. Dans la figure 1, les abonnements ABO 1 à ABO 3 ont été souscrits auprès de trois opérateurs distincts, respectivement OP 1, OP 2 et OP 3 gérant chacun leur propre réseau de télécommunications.

Comme indiqué précédemment, un ou plusieurs abonnements peuvent être actifs simultanément et au moins un abonnement n'est pas actif. Ici, seul l'abonnement ABO 1 est actif, alors que les abonnements ABO 2 et ABO 3 sont inactifs.

A chaque abonnement correspond un numéro d'appel : le titulaire du terminal 10 peut être joint au numéro (MSISDN) +123 sur l'abonnement ABO 1, au numéro +456 sur l'abonnement ABO 2 et sur le numéro +789 sur l'abonnement ABO 3.

Dans la description suivante, un numéro d'appel est appelé numéro d'appel actif si l'abonnement correspondant est actif (c'est-à-dire ici +123) et un numéro d'appel est appelé numéro d'appel inactif si l'abonnement correspondant est inactif (ce qui est le cas pour les numéros d'appel +456 et +789).

Si un utilisateur d'un second terminal 20 souhaite contacter l'utilisateur du premier terminal 10, il doit composer le numéro +123. Or, cet utilisateur du second terminal 20 ne peut pas savoir quel abonnement est actif dans le premier terminal 10.

A cet effet, la présente invention propose d'utiliser un gestionnaire 12 de l'élément de sécurité 11. Ce gestionnaire 12 peut communiquer avec l'élément de sécurité par voie radio et a connaissance de l'abonnement actif (ABO 1) dans l'élément de sécurité 11 par l'un des trois mécanismes suivants, donnés à titre d'exemples:
- le gestionnaire 12 peut transmettre à l'élément de sécurité 11, lors d'une étape 30, une commande d'activation d'un abonnement (ici l'abonnement ABO 1). Lors d'une étape 31, l'élément de sécurité active l'abonnement ABO 1 et renvoie, lors d'une étape 32 un accusé de réception ainsi qu'une confirmation que l'abonnement ABO 1 a bien été activé. Le gestionnaire 12 sait alors que l'abonnement ABO 1 est actif dans l'élément de sécurité 11.
- l'utilisateur du terminal 10 peut également volontairement activer l'abonnement ABO 1, en interagissant avec l'interface homme-machine du terminal 10 (typiquement le clavier). L'étape 32 consiste alors à informer le gestionnaire 12 que l'abonnement ABO 1 est actif.
- un évènement extérieur peut également être à l'origine de l'activation de l'abonnement ABO 1 : détection de changement de pays et donc d'opérateur préféré, couverture réseau insuffisante sur l'un des autres abonnements et basculement d'un abonnement (ABO 2 ou ABO 3) vers l'abonnement ABO 1. L'étape 32 consiste alors ici aussi à informer le gestionnaire 12 que l'abonnement ABO 1 est actif.

Du fait de la connaissance de l'abonnement actif dans l'élément de sécurité 11, le gestionnaire 12 sait que le terminal 10 peut être contacté grâce au numéro de téléphone +123.

Le gestionnaire 12 est apte à communiquer avec le ou les opérateurs des abonnements ABO 1 à ABO 3.

Selon l'invention, lors d'une étape 33, le gestionnaire 12 transmet aux opérateurs OP 2 et OP 3 (dont les abonnements ne sont pas actifs) une information selon laquelle l'abonnement actif est l'abonnement ABO 1. Ces opérateurs procèdent alors à une redirection d'appel sur l'abonnement actif ABO 1 afin que ceux-ci redirigent les numéros d'appel inactifs (+456 pour l'opérateur OP 2 et +789 pour l'opérateur OP 3) vers le numéro d'appel actif +123. Ainsi, si l'utilisateur du terminal 20 contacte celui du terminal 10 avec l'un de ces numéros inactifs, ceux-ci seront redirigés au niveau du réseau de l'opérateur OP 2 ou OP 3 pour que le terminal 10 soit contacté sur son numéro actif (+123).

La figure 2 représente une alternative au premier mode de mise en oeuvre du procédé selon la présente invention.

La configuration du système est sensiblement la même que celle de la figure 1: le premier terminal 10 coopère avec un élément de sécurité 11 renfermant plusieurs abonnements dont un seul est actif à la fois ou pour le moins, un abonnement n'est pas actif. Le gestionnaire 12 connaît le ou les abonnements actifs sur cet élément de sécurité (ici également ABO 1).

La différence par rapport au système décrit en référence à la figure 1 est que le second terminal 20 (celui de l'appelant) comprend une application (applet) 21 dont la fonction est de demander l'un des numéros actifs dans l'élément de sécurité 11 (puisqu'il n'a pas connaissance du ou des abonnements actifs). L'application 21, préférablement installée au niveau de son propre élément de sécurité, transmet une requête de numéro de téléphone actif de l'élément de sécurité 11, lors d'une étape 22, à son opérateur qui la retransmet, lors d'une étape 23, au gestionnaire 12. Celui-ci, ayant connaissance de l'abonnement actif (ABO 1), transmet, lors d'une étape 24, une information sur le ou les abonnements actifs dans l'élément de sécurité 11. L'application 21 peut alors soit composer directement le numéro de téléphone correspondant à l'un des abonnements actifs, soit proposer à l'utilisateur du terminal 20 de valider l'appel vers un de ces numéros actifs.

L'invention concerne également un système de télécommunications comprenant:
- un premier terminal de télécommunications 10 coopérant avec un élément de sécurité 11 renfermant des données de sécurité correspondant à plusieurs abonnements (ABO 1 à ABO 3) à au moins un réseau d'opérateur de télécommunication (OP1 à OP3), au moins un abonnement étant inactif et au moins un abonnement étant actif, à chaque abonnement correspondant un numéro d'appel, un numéro d'appel étant appelé numéro d'appel actif si l'abonnement correspondant est actif, un numéro d'appel étant appelé numéro d'appel inactif si l'abonnement correspondant est inactif ;
- un gestionnaire 12 de l'élément de sécurité 11 ayant connaissance de l'abonnement actif dans l'élément de sécurité 11;
- au moins un réseau d'opérateur de télécommunications (OP 1 à OP 3),
ce gestionnaire 12 de l'élément de sécurité 11 comprenant des moyens pour transmettre à ce réseau d'opérateur une information sur l'abonnement actif afin que celui-ci redirige un numéro d'appel inactif composé par un deuxième terminal de télécommunications 20 vers le numéro d'appel actif.

Le gestionnaire 12 comprend des moyens pour commander l'activation d'un des abonnements dans l'élément de sécurité 11 et l'élément de sécurité 11 comprend des moyens pour confirmer l'activation de l'abonnement auprès du gestionnaire 12.

Dans le cas où chacun des abonnements (ABO 1 à ABO 3) a été souscrit auprès d'un opérateur distinct (OP 1 à OP 3), le gestionnaire 12 comporte des moyens pour informer les opérateurs dont les abonnements ne sont pas actifs afin que ceux-ci redirigent chacun le numéro d'appel inactif composé par le deuxième terminal de télécommunications 20 vers le numéro d'appel actif.

Le deuxième terminal de télécommunications peut également être constitué par une plate-forme OTA servant à gérer des données ou des programmes compris dans les abonnements actifs.

La présente invention assimile un élément de sécurité comprenant plusieurs abonnements à plusieurs éléments de sécurité (UICCs) comprenant chacun un abonnement. Il n'y a en effet pas de différence entre un terminal comprenant un élément de sécurité unique renfermant plusieurs abonnements et un terminal comprenant plusieurs éléments de sécurité (par exemple deux cartes Sims) renfermant chacune un abonnement. Un terminal de ce type est généralement appelé « dual slot » car il permet l'utilisation alternative de deux cartes Sims.

## Revendications

1. Procédé de redirection d'appel mis en oeuvre dans un système de télécommunications comprenant:
- un premier terminal de télécommunications (10) coopérant avec un élément de sécurité (11) renfermant des données de sécurité correspondant à plusieurs abonnements (ABO 1 - ABO 3) à au moins un réseau d'opérateur de télécommunication (OP 1 - OP 3), au moins un abonnement étant inactif et au moins un abonnement étant actif, à chaque abonnement correspondant un numéro d'appel, un numéro d'appel étant appelé numéro d'appel actif si l'abonnement correspondant est actif, un numéro d'appel étant appelé numéro d'appel inactif si l'abonnement correspondant est inactif ;
- un gestionnaire (12) dudit élément de sécurité (11) ayant connaissance de l'abonnement actif dans ledit élément de sécurité (11);
- au moins un réseau d'opérateur de télécommunications (OP 1 - OP 3),
**caractérisé en ce qu'**il consiste à transmettre depuis ledit gestionnaire (12) dudit élément de sécurité (11) audit au moins un réseau d'opérateur (OP 1 - OP 3) une information sur ledit abonnement actif afin que celui-ci redirige un numéro d'appel inactif composé par un deuxième terminal de télécommunications (20) vers ledit numéro d'appel actif.

2. Procédé selon la revendication 1, **caractérisé en ce que** ledit gestionnaire (12) dudit élément de sécurité (11) commande l'activation d'un desdits abonnements dans ledit élément de sécurité (11) et **en ce que** ledit élément de sécurité (11) confirme l'activation dudit abonnement auprès dudit gestionnaire (12).

3. Procédé selon l'une des revendications 1 et 2, **caractérisé en ce que** chacun desdits abonnements (ABO 1 - ABO 3) a été souscrit auprès d'un opérateur distinct (OP 1 - OP 3) et **en ce que** ledit gestionnaire (12) informe les opérateurs (OP 1 - OP 3) dont les abonnements ne sont pas actifs afin qu'ils redirigent lesdits numéros d'appel inactifs composés par ledit deuxième terminal de télécommunications (20) vers ledit numéro d'appel actif.

4. Procédé selon l'une des revendications 1 à 3, **caractérisé en ce que** ledit élément de sécurité (11) est un e-UICC ou un ensemble d'UICCs.

5. Système de télécommunications comprenant:
- un premier terminal de télécommunications (10) coopérant avec un élément de sécurité (11) renfermant des données de sécurité correspondant à plusieurs abonnements (ABO 1 - ABO 3) à au moins un réseau d'opérateur de télécommunication (OP 1 - OP 3), au moins un abonnement étant inactif et au moins un abonnement étant actif, à chaque abonnement correspondant un numéro d'appel, un numéro d'appel étant appelé numéro d'appel actif si l'abonnement correspondant est actif, un numéro d'appel étant appelé numéro d'appel inactif si l'abonnement correspondant est inactif;
- un gestionnaire (12) dudit élément de sécurité (11) ayant connaissance de l'abonnement actif dans ledit élément de sécurité (11);
- au moins un réseau d'opérateur de télécommunications (OP 1 - OP 3),
**caractérisé en ce que** ledit gestionnaire (12) dudit élément de sécurité (11) comprend des moyens pour transmettre audit au moins un réseau d'opérateur (OP 1 - OP 3) une information sur ledit abonnement actif afin que celui-ci redirige un numéro d'appel inactif composé par un deuxième terminal de télécommunications (20) vers ledit numéro d'appel actif.

6. Système selon la revendication 5, **caractérisé en ce que** ledit gestionnaire (12) dudit élément de sécurité (11) comprend des moyens pour commander l'activation d'un desdits abonnements (ABO 1 - ABO 3) dans ledit élément de sécurité (11) et **en ce que** ledit élément de sécurité (11) comprend des moyens pour confirmer l'activation dudit abonnement auprès dudit gestionnaire (12).

7. Système selon l'une des revendications 5 et 6, **caractérisé en ce que** chacun desdits abonnements (ABO 1 - ABO 3) a été souscrit auprès d'un opérateur distinct (OP 1 - OP 3) et **en ce que** ledit gestionnaire comporte des moyens pour informer les opérateurs (OP 1 - OP 3) dont les abonnements ne sont pas actifs afin que ceux-ci redirigent chacun le numéro d'appel inactif composé par ledit deuxième terminal de télécommunications (20) vers ledit numéro d'appel actif.

8. Système selon l'une des revendications 5 à 7, **caractérisé en ce que** ledit élément de sécurité (11) est un e-UICC ou un ensemble d'UICCs.
